# EUROPÄISCHE PATENTANMELDUNG

(11) **EP 3 418 562 A1**
(43) Veröffentlichungstag der Anmeldung: **26.12.2018**
(21) Anmeldenummer: 17177648.7
(22) Anmeldetag: 23.06.2017
(51) Int. Cl.: F03D 80/40

(54) **HEIZSYSTEM FÜR EIN ROTORBLATT EINER WINDENERGIEANLAGE UND ROTORBLATT**

(71) Anmelder: Nordex Energy GmbH, 22419 Hamburg (DE)
(72) Erfinder: Runge, Ines, 24558 Henstedt-Ulzburg (DE)
(74) Vertreter: Epping - Hermann - Fischer

(57) **Zusammenfassung**

Ein Heizsystem für ein Rotorblatt (104) einer Windenergieanlage (100) weist auf:
- ein flächig ausgedehntes elektrisches Heizmodul (107), das sich mit einem Mittelbereich (108) entlang einer ersten Achse (109) erstreckt, und
- einen Seitenbereich (110, 118), der sich ausgehend von dem Mittelbereich (108) entlang einer Haupterstreckungsrichtung (111) erstreckt, wobei die Haupterstreckungsrichtung (111) entlang einer zweiten Achse (112) verläuft und die zweite Achse (112) in einem Winkel schräg zur ersten Achse (109) ausgerichtet ist.

## Beschreibung

Die Erfindung betrifft ein Heizsystem für ein Rotorblatt einer Windenergieanlage. Darüber hinaus wird ein Rotorblatt einer Windenergieanlage beschrieben, das insbesondere ein erfindungsgemäßes Heizsystem aufweist.

Windenergieanlagen werden verwendet, um Energie des Windes in elektrische Energie umzuwandeln. Dazu weisen sie herkömmlich ein Rotorblatt oder mehrere Rotorblätter auf. Diese können bei entsprechenden Umweltbedingungen vereisen. Eine Vereisung der Rotorblätter kann beispielsweise zu einer Verschlechterung der aerodynamischen Eigenschaften führen oder andere negative Einflüsse auf den Betrieb der Windenergieanlage haben.

Üblicherweise werden Heizsysteme in Form von langestreckten rechteckigen oder trapezförmigen Heizmatten auf den Rotorblättern angeordnet. Die Heizmatten bedecken sowohl die Nasenkante als auch die Druck- bzw. Saugseite der Rotorblätter. Alternativ kann auch eine Vielzahl von rechteckigen Heizmodulen entlang der Nasenkante angeordnet werden, die sich jeweils bis auf die Druck- bzw. Saugseite erstrecken und quer zur Längsachse des Rotorblatts bestromt werden. Bei der Montage dieser Heizmodule kann es aufgrund der in verschiedenen Bereichen konkav oder konvex gewölbten Oberfläche des Rotorblatts zu Überlappungen oder Zwischenräumen zwischen den Heizmodulen kommen. Die Überlappungen wirken sich störend auf den Stromfluss in den Heizmodulen aus, während es in den Zwischenräumen zu einer Eisbildung kommen kann.

Es ist wünschenswert, ein Heizsystem für ein Rotorblatt einer Windenergieanlage anzugeben, das einen verlässlichen Betrieb einer Windenergieanlage ermöglicht. Zudem ist es wünschenswert, ein Rotorblatt mit einem Heizsystem anzugeben, das einen verlässlichen Betrieb einer Windenergieanlage ermöglicht.

Das erfindungsgemäße Heizsystem für ein Rotorblatt einer Windenergieanlage weist gemäß zumindest einer Ausführungsform ein flächig ausgedehntes elektrisches Heizmodul auf. Das Heizmodul erstreckt sich mit einem Mittelbereich entlang einer ersten Achse. Das Heizmodul weist einen Seitenbereich auf. Der Seitenbereich erstreckt sich ausgehend von dem Mittelbereich entlang einer Haupterstreckungsrichtung. Die Haupterstreckungsrichtung verläuft entlang einer zweiten Achse. Die zweite Achse verläuft in einem Winkel schräg zur ersten Achse.

Das elektrische Heizmodul ist insbesondere eine Widerstandsheizung. Das Heizmodul weist beispielsweise ein elektrisch leitfähiges Material auf und wird im Betrieb von einem elektrischen Heizstrom durchflossen, sodass sich das Heizmodul erwärmt.

Eine Form des Heizmoduls mit einem schräg verlaufenden Seitenbereich ermöglicht, dass das Heizmodul im bestimmungsgemäßen Betrieb schräg zum einströmenden Wind verläuft. Somit ist es insbesondere beim Einsatz von mehreren Heizmodulen an einem Rotorblatt möglich, eine Ausbildung von Eis zwischen den Heizmodulen zu vermeiden. Somit ist es möglich, die aerodynamischen Eigenschaften des Rotorblatts zu erhalten. Außerdem ist es somit möglich, eine Geräuschemission aufgrund von Eisansatz zwischen den Heizmodulen während des Betriebs zu vermeiden. Alternativ oder zusätzlich ist es somit möglich, die Gefahr einer erneuten Vereisung des Rotorblatts zu reduzieren, da Kristallisationsstellen auf dem Rotorblatt reduziert werden.

Wie nachfolgend auch noch unter Bezugnahme auf die Figuren deutlich wird, werden das Heizmodul und die zugehörigen Geometrien teilweise anhand der abgerollten Mantelfläche der Heizmodule beziehungsweise des Heizsystems erläutert. "Schräg" kann gemäß Ausführungsformen im Rahmen dieser Anmeldung "nicht senkrecht" bedeuten.

Gemäß einer Ausführungsform weist das Heizmodul eine von einem Rechteck abweichende Form auf. Beispielsweise weist das Heizmodul die Form eines konvex-konkaven Sechsecks auf. Eine Seite des Heizmoduls weist einen konkaven Verlauf auf. Eine gegenüberliegende Seite weist einen konvexen Verlauf auf. Weitere Formen, beispielsweise mit abgerundeten Ecken oder gekrümmten Kantenverläufen, sind möglich, wenn ein Seitenbereich ausgebildet ist, der schräg zur ersten Achse des Mittelbereichs verläuft.

Gemäß einer Ausführungsform weist der Seitenbereich eine erste Kante und eine zweite Kante auf. Die erste Kante ist entlang der Haupterstreckungsrichtung ausgerichtet. Die zweite Kante ist entlang der Haupterstreckungsrichtung ausgerichtet. Die erste Kante schließt mit der ersten Achse einen ersten Winkel ein. Die zweite Kante schließt mit der ersten Achse einen zweiten Winkel ein. Der erste Winkel ist größer als der zweite Winkel. Somit ändert sich die Breite des Seitenbereichs entlang der Haupterstreckungsrichtung. Nah am Mittelbereich ist der Seitenbereich breiter als weiter entfernt am abgewandten Ende des Seitenbereichs. Die erste und zweite Kante können einen geraden Verlauf haben. Sie können aber auch leicht konvex oder konkav ausgebildet sein.

Der erste Winkel und der zweite Winkel sind auf den beiden Seiten des Heizmoduls unterschiedlich ausgeführt, d.h. der erste Winkel ist größer als der zweite Winkel, sodass bei der Verwendung von mehreren benachbart zueinander angeordneten Heizmodulen in den äußeren Bereichen der Heizmodule ein größerer Spalt zwischen den Heizmodulen entsteht. Dadurch sind die Heizmodule einfach montierbar. Es müssen lediglich im Mittelbereich vorgegebene Toleranzabstände eingehalten werden. Im äußeren Bereich ergeben sich dann auch in konkav gewölbten Bereichen der Oberfläche des Rotorblatts ausreichende Abstände aufgrund der unterschiedlichen Winkel.

Ein größerer Abstand führt aufgrund der schrägen Ausrichtung auch nicht zu einer Ausbildung von Eis zwischen den Heizsegmenten, da im Betrieb der Wind schräg zu dem Spalt zwischen den Heizmodulen einströmt.

Insbesondere sind der erste Winkel und der zweite Winkel jeweils < 90° und > 0°. Beispielsweise kann der erste Winkel 60° und der zweite Winkel 58° betragen. Alternativ kann beispielsweise der erste Winkel 40° und der zweite Winkel 36° betragen.

Gemäß einer Ausführungsform weist das Heizmodul einen zweiten Seitenbereich auf. Das Heizmodul erstreckt sich beidseitig des Mittelbereichs. Beide Seitenbereiche sind in die gleiche Richtung geneigt. Alternativ ist es auch möglich, dass die Seitenbereiche in gegensätzliche Richtungen geneigt verlaufen. Beide Seitenbereiche sind dennoch schräg zum Mittelbereich ausgerichtet. Die ersten Kanten auf der einen Seite weisen beispielsweise gemeinsam einen konkaven Verlauf auf und die zweiten Kanten auf der gegenüberliegenden Seite weisen beispielsweise einen konvexen Verlauf auf.

Die Verwendung von zwei Seitenbereichen ermöglicht ein Heizen des Rotorblatts beispielsweise beidseitig einer Nasenkante. Die Luft strömt im Betrieb auf die Nasenkante und wird auf der Druckseite und auf der Saugseite des Rotorblatts von dem Heizmodul erwärmt.

Gemäß einer Ausführungsform weist ein Heizsystem eine Mehrzahl von erfindungsgemäßen Heizmodulen auf. Jeweils zwei unmittelbar benachbarte Heizmodule weisen einen sich ändernden Abstand zueinander auf. Der Abstand zwischen den jeweiligen Mittelbereichen der Heizmodule ist geringer als der Abstand zwischen den jeweiligen Seitenbereichen. Somit ist es möglich, die Positioniergenauigkeit der Heizmodule während der Produktion zu erhöhen.

Durch die Form der Heizmodule muss insbesondere nur noch auf die Lage der Heizmodule im Mittelbereich, also beispielsweise auf der Nasenkante, geachtet werden. Dadurch ist es möglich, Lagetoleranzen der Heizmodule einfach einzuhalten. Außerdem wird es möglich, mit den Heizmodulen einen gebogenen Verlauf der Nasenkante zu folgen, ohne dass sich die Heizmodule insbesondere in den Seitenbereichen überlappen.

Der Abstand erstreckt sich insbesondere entlang einer Haupterstreckungsrichtung, die schräg zur ersten Achse verläuft. Der Abstand zwischen zwei unmittelbar benachbarten Heizmodulen ist somit schräg zum Mittelbereich der Heizmodule ausgerichtet.

Gemäß einer Ausführungsform verlaufen jeweils unmittelbar benachbarte Kanten von zwei unmittelbar nebeneinander angeordneten Heizmodulen schräg zueinander. Somit wird der Abstand zwischen den Heizmodulen entlang der Haupterstreckungsrichtung des Abstands größer. Die unmittelbar benachbarten Kanten sind nicht parallel zueinander ausgebildet.

Gemäß einem Aspekt weist ein Rotorblatt für eine Windenergieanlage ein erfindungsgemäßes Heizsystem gemäß zumindest einer Ausführungsform auf. Das Heizmodul ist mit seiner ersten Achse entlang der Nasenkante des Rotorblatts angeordnet. Die zweite Achse verläuft in einem Winkel schräg zur ersten Achse und somit zu der Nasenkante. Ein Zwischenbereich zwischen zwei unmittelbar benachbarten Heizmodulen verläuft schräg zu der Nasenkante.

Insbesondere verlaufen die zweite Achse schräg zur Nasenkante und der Zwischenbereich schräg zur Nasenkante, wenn eine abgerollte Mantelfläche des Rotorblatts betrachtet wird. Auch in Projektion auf eine Ebene verlaufen die zweite Achse und der Zwischenbereich schräg zu der Nasenkante. Beim Anströmen von Luft strömt diese nicht entlang des Zwischenbereichs, sondern hauptsächlich schräg zum Zwischenbereich. Somit wird die anströmende Luft erwärmt, bevor sie über den Zwischenbereich strömt. Dadurch ist es möglich, den Zwischenbereich zwischen den Heizmodulen zu enteisen. Die Luftströmung streicht senkrecht zur Nasenkante über das Rotorblatt. Dabei erwärmt sie sich und kann die Wärme beim Überstreichen des nicht beheizten Zwischenbereichs an diesen abgeben.

Insbesondere ist der Zwischenbereich so ausgerichtet, dass während eines bestimmungsgemäßen Betriebs eine Hauptströmungsrichtung der Luft schräg zu dem Zwischenbereich ist. Somit können Vereisungen der Rotorblätter insbesondere zwischen Heizmodulen des Heizsystems vermieden werden.

Weitere Vorteile, Merkmale und Weiterbildungen ergeben sich aus den nachfolgenden, in Verbindung mit den Figuren erläuterten Beispielen.

Es zeigen:
Figur 1 eine schematische Darstellung einer Windenergieanlage gemäß einem Ausführungsbeispiel,
Figur 2 eine schematische Darstellung eines Heizmoduls gemäß einem Ausführungsbeispiel,
Figur 3 eine schematische Darstellung eines Heizsystems gemäß einem Ausführungsbeispiel, und
Figur 4 eine schematische Darstellung eines Rotors mit einem Heizsystem gemäß einem Ausführungsbeispiel.

Gleiche, gleichartige oder gleichwirkende Elemente können in den Figuren mit den gleichen Bezugszeichen versehen sein. die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

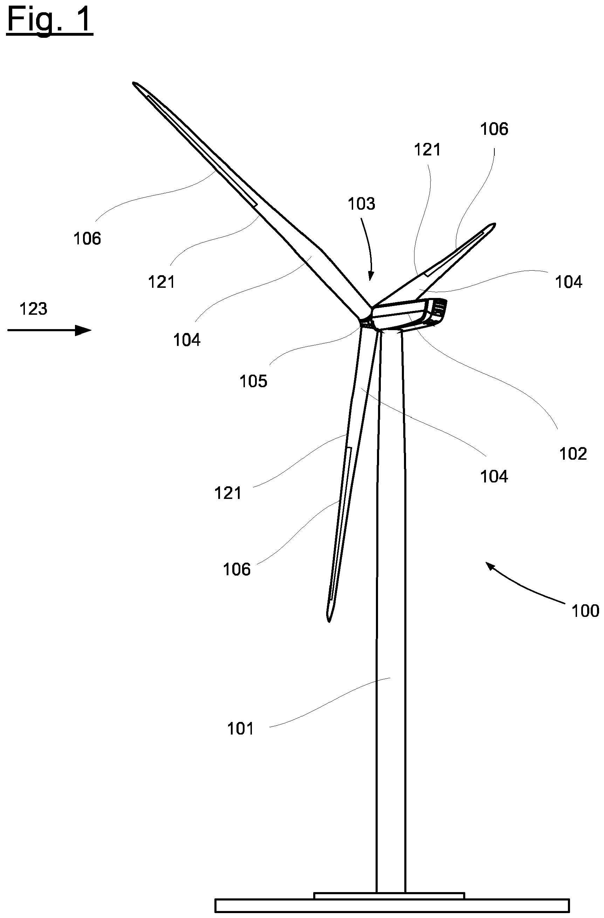

Figur 1 zeigt eine schematische Darstellung einer Windenergieanlage 100 gemäß einem Ausführungsbeispiel. Die Windenergieanlage 100 weist einen Turm 101 auf. Der Turm 101 ist mittels eines Fundaments auf einem Untergrund befestigt. An einem dem Untergrund gegenüberliegenden Ende des Turms 101 ist eine Gondel 102 drehbar gelagert.

Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind. Der Rotor 103 wird im Betrieb durch eine Luftströmung, beispielsweise Wind, der entlang einer Hauptströmungsrichtung 123 einströmt, in Rotation versetzt. Diese Rotationsbewegung wird über die Rotorwelle und gegebenenfalls ein Getriebe zu dem Generator übertragen. Der Generator wandelt die kinetische Energie des Rotors in elektrische Energie um.

Bei winterlichen Umgebungstemperaturen können die Rotorblätter 104 vereisen. Um eine derartige Vereisung zu vermeiden, ist es möglich, die Rotorblätter 104 mit einem Heizsystem 106 auszurüsten, welches im Bereich der Nasenkante 121 der Rotorblätter angeordnet ist.

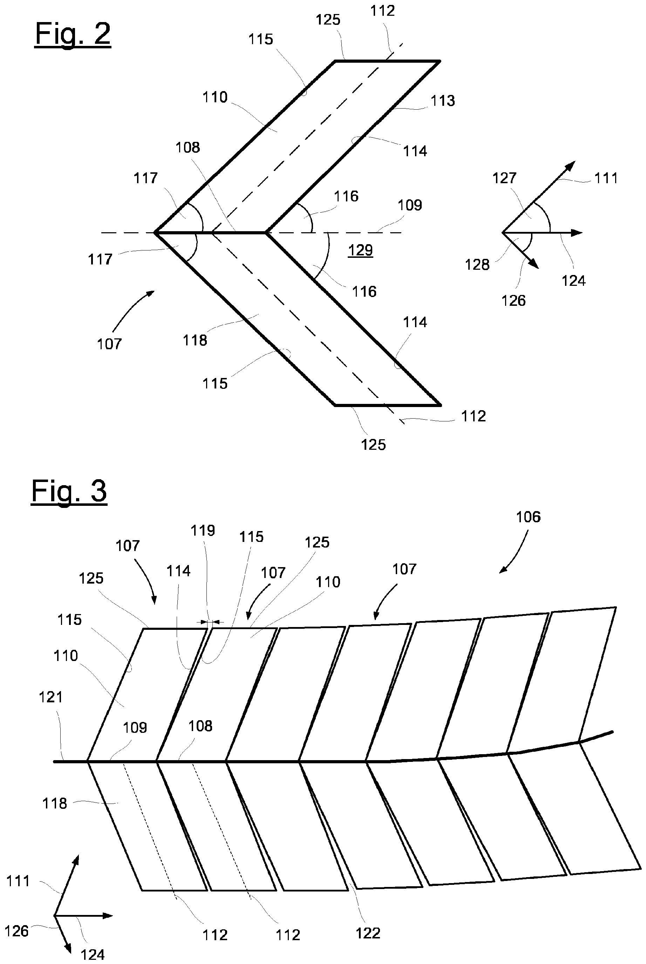

Figur 2 zeigt ein Heizmodul 107 des erfindungsgemäßen Heizsystems 106. Das Heizmodul 107 weist einen Mittelbereich 108 auf. Beidseitig des Mittelbereichs erstreckt sich jeweils ein Seitenbereich 110, 118.

Das Heizmodul ist als elektrische Widerstandsheizung ausgebildet. Beispielsweise sind elektrisch leitfähige Fasern entlang der flächigen Ausbreitung des Heizmoduls 107 angeordnet. Alternativ können auch mäanderförmige Heizstränge auf dem Heizmodul ausgebildet sein. Das elektrische Heizmodul 107 weist somit eine beheizbare Fläche auf und kann im Betrieb auf eine Temperatur erwärmt werden, die ein Ausbilden von Vereisungen an den Rotorblättern 104 vermeidet. Das Heizmodul 107 weist insbesondere weitere nicht explizit dargestellte Elemente wie elektrische Anschlüsse zur Kontaktierung mit einer Stromversorgung und/oder mechanische Schnittstellen zur Befestigung an dem Rotorblatt 104 auf.

Der Mittelbereich 108 erstreckt sich entlang einer ersten Achse 109. Der Mittelbereich 108 kann wie im dargestellten Ausführungsbeispiel quer zu einer Richtung 124 vergleichsweise schmal ausgebildet sein. Auch eine etwas größere Ausbreitung ist möglich, abhängig von der Form des Rotorblatts 104.

Die erste Achse 109 verläuft entlang der Richtung 124. Schräg zu der Richtung 124 verläuft eine Haupterstreckungsrichtung 111 des Seitenbereichs 110. Eine Haupterstreckungsrichtung 126 des zweiten Seitenbereichs 118 verläuft ebenfalls schräg zur Richtung 124.

Eine jeweilige zweite Achse 112 der Seitenbereiche 110, 118 verläuft schräg zu der ersten Achse 109. Die zweite Achse 112 des Seitenbereichs 110 verläuft entlang der Haupterstreckungsrichtung 111. Die zweite Achse 112 des zweiten Seitenbereichs 118 verläuft entlang der Haupterstreckungsrichtung 126.

Die Haupterstreckungsrichtung 111 schließt einen Winkel 127 mit der Richtung 124 ein. Die Haupterstreckungsrichtung 126 schließt einen Winkel 128 mit der Richtung 124 ein. Die Winkel 127 und 128 können gleich groß sein. Der Winkel 127 kann aber auch größer als der Winkel 128 sein, oder umgekehrt. Insbesondere sind die Winkel 127 und 128 jeweils kleiner als 90° und größer als 0°. Die Winkel 127 und 128 sind jeweils so groß, dass die beiden Seitenbereiche 110 und 118 schräg zum Mittelbereich 108 verlaufen, insbesondere schräg zur ersten Achse 109 beziehungsweise zur Richtung 124.

Die Seitenbereiche 110, 118 weisen jeweils eine dem Mittelbereich 108 abgewandte Außenkante 125 auf. Zwischen dem Mittelbereich und der Außenkante 125 erstrecken sich zwei beabstandet zueinander verlaufende Kanten 114 und 115.

Die Kante 114 schließt mit der ersten Achse 109 einen ersten Winkel 116 ein. Der erste Winkel 116 ist kleiner als 90° und größer als 0°. Beispielsweise ist der erste Winkel 116 größer als 45°, beispielsweise größer als 60°.

Die zweite Kante 115 schließt mit der ersten Achse 109 einen zweiten Winkel 117 ein. Der zweite Winkel 117 ist kleiner als 90° und größer als 0°, beispielsweise größer als 45°, insbesondere größer als 60°.

Der erste Winkel 116 ist größer als der zweite Winkel 117, beispielsweise mindestens um 1° oder mehr. Somit verlaufen die beiden Kanten 114 und 115 nicht parallel zueinander, sondern verlaufen vom Mittelbereich 108 zur Außenkante 125 schräg aufeinander zu, so dass sich an die Kanten 114 und 115 angelegte Geraden in einem von dem Heizmodul 107 entfernten Punkt auf der zweiten Achse 112 schneiden würden.

Das Heizmodul 107 weist somit eine Form 113 auf, die von einem Rechteck abweicht. Die Form 113 entspricht insbesondere nicht der Form eines Parallelogramms oder eines Trapez. Das Heizmodul hat beispielsweise eine pfeilartige beziehungsweise pfeilspitzenartige Form. Die Form 113 entspricht beispielsweise der Form eines konkav-konvexen Sechsecks. Zwischen den beiden Seitenbereichen 110 und 118 wird somit ein Raum 129 ausgebildet, in dem ein weiteres Heizmodul 107 zumindest teilweise angeordnet werden kann.

Das Heizmodul 107 kann selbstverständlich auch mehrteilig ausgebildet sein. Die beiden Seitenbereiche 110 und 118 können beispielsweise als separate Heizelemente ausgebildet sein, die im Mittelbereich 108 aneinander anliegen oder sich im Mittelbereich 108 überlappen.

Figur 3 zeigt ein Heizsystem 106 gemäß einem Ausführungsbeispiel mit einer Mehrzahl von Heizmodulen 107. Die Heizmodule 107 sind benachbart zueinander angeordnet. Jeweils zwei unmittelbar nebeneinander angeordnete Heizmodule 107 weisen einen Abstand 119 zueinander auf. Somit schließen jeweils zwei unmittelbar benachbart zueinander angeordnete Heizmodule 107 einen Zwischenbereich 122 ein. Ein entlang der Richtung 124 unmittelbar neben einem Heizmodul 107 angeordnetes Heizmodul 107 ist somit teilweise in dem Raum 129 des ersten Heizmoduls 107 angeordnet. Die Heizmodule 107 sind jeweils so zueinander angeordnet, dass eine ausreichende Sicherheit und Trennung der stromführenden Bereiche der einzelnen Heizmodule 107 gewährleistet ist.

Aufgrund der unterschiedlichen Winkel 116 und 117 ändert sich der Abstand 119 entlang einer Haupterstreckungsrichtung 111, 126. Die Haupterstreckungsrichtungen 111, 126 verlaufen schräg zur ersten Achse 109. Somit ist es möglich, bei der Montage des Heizsystems 106 die Heizmodule 107 jeweils im Mittelbereich 108 anhand vorgegebener Toleranzen zueinander auszurichten, während die Seitenbereiche 110 und 118 jeweils zu ihren benachbarten Seitenbereichen 110, 118 einen Abstand aufweisen können.

Durch die besondere Ausgestaltung ist es möglich, dass die Heizmodule 107 der gebogenen Linie einer Nasenkante 121 bzw. der gewölbten Oberfläche des Rotorblatts 104 folgen, ohne dass sich die Heizmodule im Mittelbereich 108 oder in den Seitenbereichen 110, 118 überlappen.

Der Abstand 119 ist beispielsweise zwischen 10 mm und 70 mm, insbesondere zwischen 30 mm und 50 mm. Insbesondere ist der Abstand 119 nah an den jeweiligen Mittelbereichen 108 geringer als an den Außenkanten 125.

Abhängig von der Ausgestaltung der Kanten 114 und 115 ist die Änderung des Abstands beispielsweise linear. Die Kanten 114 und 115 verlaufen beispielsweise geradlinig oder geschwungen. Auch eine diskrete beziehungsweise sprunghafte Änderung des Abstands 119 ist möglich. Beispielsweise verlaufen die Kanten 114 und 115 jeweils nichtlinear, beispielsweise stufenförmig.

In Projektion auf eine Fläche, in der die Nasenkante 121 verläuft, also eine Fläche senkrecht zur Blattebene entlang der Nasenkante 121, überlappen sich jeweils zumindest die unmittelbar nebeneinander angeordneten Heizmodule 107 insbesondere in den Seitenbereichen 110, 118.

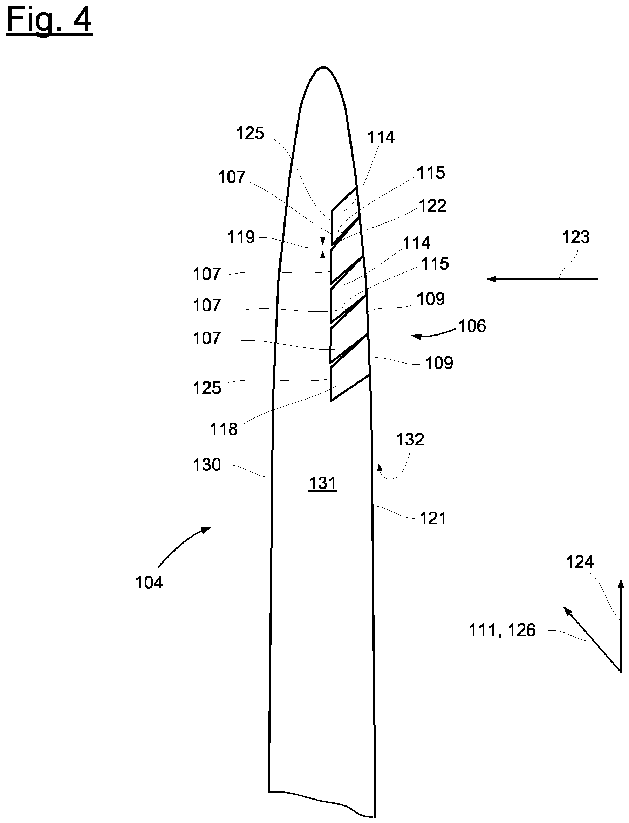

Figur 4 zeigt eine schematische Darstellung des äußeren Bereichs eines Rotorblatts 104 mit einem Heizsystem 106 gemäß einem Ausführungsbeispiel mit Blick auf die Druckseite 131. Die Nasenkante 121 ist die Kante, auf die die Luftströmung während des Betriebs mit der Hauptströmungsrichtung 123 auftrifft. Nachfolgend strömt die Luft an der Druckseite 131 und Saugseite 132 des Rotorblatts 104 in Richtung der Endkante 130.

Das Heizsystem 106 ist so an dem Rotorblatt 104 angeordnet, dass die jeweiligen Mittelbereiche 108 entlang der Nasenkante 121 angeordnet sind. Insbesondere verlaufen die ersten Achsen 109 jeweils entlang der Nasenkante 121. Die Seitenbereiche 110 und die nicht explizit dargestellten Seitenbereiche 118, die auf der Saugseite 132 rückseitig des Rotorblatts 104 in der dargestellten Ansicht angeordnet sind, verlaufen schräg zur Hauptströmungsrichtung 123 der Luft.

Der Zwischenbereich 122 ist ebenfalls schräg zur Hauptströmungsrichtung 123 ausgerichtet. Im Betrieb strömt die Luftströmung somit stets zumindest teilweise über ein Heizmodul 107 bevor sie einen Zwischenbereich 122 erreicht. Die Hauptströmungsrichtung 123 verläuft nicht entlang eines Zwischenbereichs 122. Die Zwischenbereiche 122 sind jeweils so ausgerichtet, dass sie von der Hauptströmungsrichtung 123 abweichen. Die Luftströmung wird von den Heizmodulen 107 zunächst erwärmt und gelangt nachfolgend zu einem Zwischenbereich 122. Die Wärme der Luftströmung reicht aus, um den Zwischenbereich 122 zu erwärmen und eisfrei zu halten. Somit wird die aerodynamische Leistungsfähigkeit des Rotorblattes 104 auch bei kalten Umgebungsbedingungen erhalten. Erhöhte mechanische Lasten aufgrund von Vereisungen können vermieden werden. Eine Gefahr von sich lösendem Eis kann verringert werden. Zudem können Geräuschemissionen aufgrund von Vereisungen vermindert werden.

Das Heizsystem 106 mit den schräg ausgerichteten Seitenbereichen 110, 118 ermöglicht eine Rotorblattheizung mit einer Vielzahl von Heizmodulen 107, bei der auch die Zwischenbereiche 122 zwischen den Heizmodulen 107 verlässlich eisfrei gehalten werden können. Die Form 113 der Heizmodule 107 wird jeweils so zugeschnitten, dass die Heizmodule 107 jeweils von der Nasenkante 121 in Richtung einer Endkante 130 des Rotorblattes 104 nicht senkrecht verlaufen sondern unter dem Winkel 127 beziehungsweise 128. Beim Anströmen streicht die Luftströmung ausgehend von der Nasenkante 121 über das Rotorblatt 104. Dabei erwärmt sich die Luft und gibt die Wärme beim Überstreichen des Rotorblattes in dem nicht aktiv beheizten Zwischenbereich 122 an das Rotorblatt 104 ab. Somit ist ein Heizsystem 106 gegeben, das sich aufgrund des sich ändernden Abstands 119 einfach innerhalb vorgegebener Toleranzen montieren lässt. Im Betrieb ist eine verlässliche Vermeidung von Eisbildung im gesamten Heizsystem 106 möglich inklusive der Zwischenbereiche 122.

### Bezugszeichen

- 100: Windenergieanlage
- 101: Turm
- 102: Gondel
- 103: Rotor
- 104: Rotorblatt
- 105: Rotornabe
- 106: Heizsystem
- 107: Heizmodul
- 108: Mittelbereich
- 109: erste Achse
- 110: Seitenbereich
- 111: Haupterstreckungsrichtung
- 112: zweite Achse
- 113: Form
- 114: erste Kante
- 115: zweite Kante
- 116: erster Winkel
- 117: zweiter Winkel
- 118: zweiter Seitenbereich
- 119: Abstand
- 121: Nasenkante
- 122: Zwischenbereich
- 123: Hauptströmungsrichtung
- 124: Richtung
- 125: Außenkante
- 126: Haupterstreckungsrichtung
- 127: dritter Winkel
- 128: vierter Winkel
- 129: Raum
- 130: Endkante
- 131: Druckseite
- 132: Saugseite

## Patentansprüche

1. Heizsystem für ein Rotorblatt (104) einer Windenergieanlage (100), welches ein flächig ausgedehntes elektrisches Heizmodul (107) mit einem sich entlang einer ersten Achse (109) erstreckenden Mittelbereich (108)aufweist, **dadurch gekennzeichnet, dass** das Heizmodul (107) einen Seitenbereich (110, 118) umfasst, der sich ausgehend von dem Mittelbereich (108) entlang einer Haupterstreckungsrichtung (111, 126) erstreckt, wobei die Haupterstreckungsrichtung (111, 126) entlang einer zweiten Achse (112) verläuft und die zweite Achse (112) in einem Winkel schräg zur ersten Achse (109) ausgerichtet ist.

2. Heizsystem nach Anspruch 1, bei dem das Heizmodul (107) eine von einem Rechteck abweichende Form (113) aufweist.

3. Heizsystem nach Anspruch 1 oder 2, bei dem der Seitenbereich (110, 118) eine erste Kante (114) und eine zweite Kante (115) aufweist, die jeweils entlang der Haupterstreckungsrichtung (111, 126) ausgerichtet sind, wobei die erste Kante (114) mit der erste Achse (109) einen ersten Winkel (116) einschließt und die zweite Kante (115) mit der ersten Achse (109) einen zweiten Winkel (117) einschließt, wobei der erste Winkel (116) größer als der zweite Winkel (117) ist.

4. Heizsystem nach Anspruch 3, bei dem der erste Winkel (116) und der zweite Winkel (117) jeweils kleiner 90° sind.

5. Heizsystem nach einem der Ansprüche 1 bis 4, aufweisend einen zweiten Seitenbereich (110, 118), sodass sich das Heizmodul (107) beidseitig des Mittelbereichs (108) erstreckt, wobei beide Seitenbereiche (110, 118) in die gleiche Richtung (124) geneigt verlaufen.

6. Heizsystem nach Anspruch 5, bei dem
- die ersten Kanten (114) der beiden Seitenbereiche (110, 118) aneinander anschließen und gemeinsam eine Seite des Heizmoduls (107) bilden, die einen konkaven Verlauf aufweist, und
- die zweiten Kanten (115) der beiden Seitenbereiche (110, 118) aneinander anschließen und gemeinsam eine Seite des Heizmoduls (107) bilden, die einen konvexen Verlauf aufweist.

7. Heizsystem nach einem der Ansprüche 1 bis 6, aufweisend eine Mehrzahl von Heizmodulen (107), wobei
- jeweils zwei unmittelbar benachbarte Heizmodule (107) einen sich ändernden Abstand (119) zueinander aufweisen, wobei der Abstand (119) zwischen den jeweiligen Mittelbereichen (108) geringer ist als der Abstand (119) zwischen den jeweiligen Seitenbereichen (110, 118).

8. Heizsystem nach Anspruch 7, bei dem sich der Abstand (119) entlang einer Haupterstreckungsrichtung (111, 126) erstreckt, wobei die Haupterstreckungsrichtung (111, 126) schräg zu der ersten Achse (109) verläuft.

9. Heizsystem nach Anspruch 7 oder 8, bei dem jeweils unmittelbar benachbarte Kanten (114, 115) von zwei unmittelbar nebeneinander angeordneten Heizmodulen (107) in einem Winkel schräg zueinander verlaufen.

10. Rotorblatt für eine Windenergieanlage (100), aufweisend ein Heizsystem (106) nach einem der Ansprüche 1 bis 9, wobei
- das Heizmodul (107) mit seiner ersten Achse (109) entlang einer Nasenkante (121) des Rotorblatts (104) angeordnet ist,
- die zweite Achse (112) in einem Winkel schräg zu der Nasenkante (121) verläuft, und
- ein Zwischenbereich (122) zwischen zwei unmittelbar benachbarten Heizmodulen (107) in einem Winkel schräg zu der Nasenkante (121) verläuft.

11. Rotorblatt nach Anspruch 10, bei dem der Zwischenbereich (122) so ausgerichtet ist, dass während eines bestimmungsgemäßem Betriebs eine Hauptströmungsrichtung (123) einer Luftströmung schräg zu dem Zwischenbereich (122) ist.
